# EUROPÄISCHE PATENTSCHRIFT

(11) **EP 1 588 875 B1**
(45) Veröffentlichungstag und Bekanntmachung des Hinweises auf die Patenterteilung: **10.03.2010**
(21) Anmeldenummer: 05102648.2
(22) Anmeldetag: 04.04.2005
(51) Int. Cl.: B60H 1/00

(54) **Verfahren zum Betreiben einer Fahrzeug-Klimaanlage**
Operating method of an air conditioning device for vehicles
Méthode d'opération d'un système d'air conditionné pour véhicules automobiles

(30) Priorität: 10.04.2004 DE 102004017740
(43) Veröffentlichungstag der Anmeldung: 26.10.2005
(73) Patentinhaber: Behr-Hella Thermocontrol GmbH, 70190 Stuttgart (DE); AUDI AG, 85057 Ingolstadt (DE)
(72) Erfinder: Hussmann, Micha, 59555 Lippstadt (DE); Engelhardt, Günter, 85080 Gaimersheim (DE); Kirchhoff, Ralph, 85055 Ingolstadt (DE)
(74) Vertreter: Hilleringmann, Jochen

(56) Entgegenhaltungen:
- DE-C1- 10 213 094
- US-A- 5 931 006
- US-A- 5 992 162
- US-A1- 2004 050 076

## Beschreibung

Die Erfindung betrifft ein Verfahren zum Betreiben einer Fahrzeug-Klimaanlage zwecks Vermeidung des Beschlagens der Windschutzscheibe von außen oder, allgemein, zwecks Vermeidung des Beschlagens der Außenseite einer von innen mit Kühlluft anströmbaren Scheibe.

In feuchtwarmen Ländern bzw. Regionen (beispielsweise Florida/USA) ist mitunter zu beobachten, dass die Außenseite der Windschutzscheibe oder einer anderen von innen mit Kühlluft angeströmten Scheibe beschlägt. Die Ursache hierfür ist darin zu sehen, dass die Scheibe auf Grund der gegen sie strömenden Kühlluft, welche zur Erzielung eines angenehmen Klimas im Innern des Fahrzeuges eine recht niedrige Ausblastemperatur aufweist, so stark abkühlt, dass ihre Temperatur unterhalb der Taupunkttemperatur der Umgebungsluft liegt. Zur Beseitigung der auf der Außenseite der Windschutzscheibe kondensierenden Feuchtigkeit sind die Scheibenwischer zu betätigen, was als unkomfortabel und lästig empfunden wird. Noch unangenehmer ist es, wenn sich die Außenbetauung auf Scheibenflächen (beispielsweise der Seitenfenster) einstellt, auf denen die kondensierte Feuchtigkeit nicht automatisch beseitigt werden kann.

Eine Möglichkeit, Außenbeschlag zu vermeiden, besteht darin, die Fahrzeug-Klimaanlage dergestalt zu manipulieren, dass dauerhaft verhindert wird, dass Kaltluft aus den zur Scheibe gerichteten Luftauslässen gelangt, die Kaltluft also ausschließlich nur noch über andere als die zuvor genannten Luftauslässe (beispielsweise Mannanströmer oder Fußraumöffnungen) in den Fahrgastraum gelangt. Dies ist aber im Hinblick auf ein unkomfortables Raumklima nicht wünschenswert.

Aus US-A-5,931,006 ist es bekannt, bei einer im Kühlbetrieb arbeitenden Fahrzeug-Klimaanlage das Beschlagen der Außenseite der Windschutzscheibe dadurch zu verhindern, dass die Kühlluft nicht von innen gegen die Windschutzscheibe ausgeblasen wird. Ob die Kühlluftströmung gegen die Innenseite der Windschutzscheibe gerichtet ist, hängt dabei von der Temperatur der Kühlluft im Verhältnis zur Taupunkttemperatur der Umgebungsluft ab. Die Taupunkttemperatur wird dabei mit Hilfe eines Sensors messtechnisch erfasst. Liegt die Ausblastemperatur der Kühlluft unterhalb der Taupunkttemperatur der Umgebungsluft, so wird der Luftauslass nahe der Windschutzscheibe (Defrost-Auslassöffnungen) verschlossen bzw. nur teilweise geöffnet.

Ferner ist aus US-A-2004/0050076 ein Verfahren bzw. eine Vorrichtung für die Diagnose und die Vermeidung des Beschlagens einer Glasoberfläche, wie z. B. der Windschutzscheibe eines Fahrzeuges bekannt. Zur Messung der Scheibentemperatur weist die Vorrichtung einen thermischen Sensor auf. Ein zweiter thermischer Sensor erfasst die Raumtemperatur, deren Feuchtigkeit durch einen Feuchtesensor ermittelt wird. Die Daten auf diesen Sensoren werden zur Analyse einem Prozessor zugeführt. Die Differenz aus der Taupunkttemperatur und der Scheibentemperatur wird im Prozessor ermittelt, um das Gebläse und die Klappen anzusteuern und damit eine Betauung der Scheibe zu verhindern.

Der Erfindung liegt die Aufgabe zu Grunde, den Betrieb einer Fahrzeug-Klimaanlage dergestalt zu verbessern, dass bei ansonsten vollständiger Funktionsfähigkeit der Klimaanlage das Beschlagen der Außenseite einer von innen mit Kühlluft anströmbaren Scheibe, insbesondere der Windschutzscheibe, verhindert wird.

Zur Lösung dieser Aufgabe wird mit der Erfindung ein Verfahren zum Betreiben einer Fahrzeug-Klimaanlage zwecks Vermeidung des Beschlagens der Außenseite einer von innen mit Kaltluft anströmbaren Scheibe, insbesondere der Windschutzscheibe, vorgeschlagen, das die Merkmale des Anspruchs 1 aufweist.

Während es im Stand der Technik vielfältig bekannt ist, Klimaanlagen für Fahrzeuge zwecks Vermeidung eines Beschlagens der Innenseite der Windschutzscheibe oder anderer Scheiben des Fahrzeuges zu betreiben (siehe beispielsweise EP-A-0 316 545, DE-C-199 42 286 und DE-A-36 24 170), wird mit der Erfindung der Betrieb einer Fahrzeug-Klimaanlage zur Vermeidung von Außenbeschlag, d.h. zur Vermeidung des Beschlagens der Außenseite einer Windschutzscheibe oder anderen Scheibe des Fahrzeuges vorgeschlagen. Nach der Erfindung wird dabei die Taupunkttemperatur der Umgebungsluft des Fahrzeuges ermittelt bzw. abgeschätzt. Hierbei kann man sich physikalischer Messwerte, nämlich der Temperatur und der relativen Feuchtigkeit der Umgebungsluft bedienen. Der Außentemperatursensor ist im Regelfall Bestandteil einer Fahrzeug-Klimaanlage, so dass insoweit kein zusätzlicher Sensor erforderlich ist. Anders sieht es dagegen aus, wenn es um die Messung der relativen Feuchtigkeit der Umgebungsluft geht. Hier müsste im Idealfall ein Feuchtesensor vorgesehen werden. Weiter unten wird aber noch auf eine Variante/Afternativc eingegangen werden, bei der die relative Feuchtigkeit der Umgebungsluft anhand der Außentemperatur und gewisser Annahmen (Worst-Case-Betrachtungen) angenommen wird.

Ferner wird erfindungsgemäß die Temperatur der Scheibe, auf der Außenbeschlag vermieden werden soll, ermittelt bzw. abgeschätzt. Auch hier kann man messtechnisch oder mit Hilfe eines Rechenmodells arbeiten. Auf letzteres wird weiter unten im Zusammenhang mit einer alternativen Ausgestaltung der Erfindung noch näher eingegangen.

Außenbeschlag der Scheibe setzt dann ein, wenn die Scheibentemperatur gleich der oder kleiner als die Taupunkttemperatur der Umgebungsluft ist. Zur Vermeidung von Außenbeschlag wird daher erfindungsgemäß dafür gesorgt, dass der Durchsatz aus dem zur Scheibe gerichteten Luftauslass bzw. der Gesamtdurchsatz der aus sämtlichen zur Scheibe gerichteten Luftauslässen auf einen Wert eingestellt wird, so dass die Scheibe eine Temperatur annimmt, die um mindestens einen vorgebbaren Differenzwert (Sicherheitsschwelle) oberhalb der Taupunkttemperatur liegt.

Erfindungsgemäß wird also nicht die Temperatur der in den Fahrgastraum einströmenden Luft verändert. Diese Temperatur (Ausblastemperatur) ergibt sich in Abhängigkeit von der Innenraumtemperaturregelung. Auch der Durchsatz der aus jedem zur Scheibe gerichteten Luftauslass strömenden Luft ist letztendlich durch die Innenraumtemperaturregelung bestimmt. Solange die Scheibentemperatur um mindestens die Sicherheitsschwelle größer als die Taupunkttemperatur der Umgebungsluft ist, wird erfindungsgemäß nicht in den Betrieb der Fahrzeug-Klimaanlage eingegriffen. Erst wenn die Sicherheitsschwelle unterschritten wird, wird der Durchsatz der aus jedem zur Scheibe gerichteten Luftauslass verringert. Dies erfolgt durch Verfahren von Klappen in Richtung "Schließstellung". Dadurch, dass nun weniger Kaltluft gegen die Innenseite der Scheibe strömt, erwärmt sich diese infolge der (hohen) Außentemperatur. Durch Vorschalten eines Reglers vor die Stellantriebe der Klappen kann man damit diese auf die Einhaltung von Klappenwinkeln regeln, bei denen die Scheibentemperatur ausreichend oberhalb der Taupunkttemperatur liegt, so dass ein Beschlagen der Scheibe von außen nicht zu befürchten ist.

Alternativ zur Beeinflussung des Durchsatzes der aus den zur Scheibe gerichteten Luftauslässen ausströmenden Luft durch Verstellung von Klappen ist es grundsätzlich auch möglich, das den Luftstrom erzeugende Gebläse zu verstellen (durch Beeinflussung der Versorgungsspannung). Beide Maßnahmen können auch gleichzeitig getroffen werden. Die Beeinflussung des Gebläses zur Verringerung des Luftdurchsatzes zwecks Verringerung der Abkühlung der Scheibe hat in gewisser Weise aber den Nachteil, dass dem Innenraum nicht mehr die zur Erlangung der Solltemperatur erforderlich Kühlleistung zugeführt wird. Dies wirkt sich nachteilig auf das Raumklima aus.

Wird der Durchsatz der aus den der Scheibe zugewandten Luftauslässen ausströmenden Luft durch Veränderung von Klappen beeinflusst, so bedeutet dies bei einer Verringerung des Durchsatzes, dass durch andere Luftauslassöffnungen, die beispielsweise auf die Insassen oder auf den Fußraum gerichtet sind, mehr Luft austritt. Auch dies kann als unkomfortabel empfunden werden. Daher wird bei der Erfindung durch eine neben der Klappenverstellung erfolgende Verstellung des Gebläses dafür gesorgt, dass bei veränderter Stellung der Klappe für den Durchsatz der aus den der Scheibe zugewandten Luftauslässen ausströmenden Luft aus den anderen Luftauslässen im wesentlichen eine unveränderte Luftmenge (keine spürbare Luftmengenveränderung) austritt.

Zum Verständnis der Erfindung sei darauf hingewiesen, dass mit einem zur Scheibe gerichteten Luftauslass beispielsweise die Defrostdüsen in der Oberseite der Instrumententafel oder ein Auslass für eine indirekte Scheibenbelüftung wie beispielsweise die Mittenmannanströmer der Instrumententafel gemeint ist. Ferner kann der Durchsatz der ausströmenden Luft bei jeweils bekanntem wirksamen Strömungsquerschnitt auch anhand der Strömungsgeschwindigkeit beeinflusst werden. Wie durch den Durchsatz so ist die Scheibentemperatur letztendlich auch von der Anströmgeschwindigkeit der Luft beeinflusst.

Wie bereits oben im Zusammenhang mit der Ermittlung der Scheibentemperatur erwähnt, lässt sich diese unter Zuhilfenahme eines Rechenmodells ermitteln bzw, abschätzen. In das Rechenmodell fließt dabei zumindest eine der nachfolgend genannten Größen ein: Durchsatz, Geschwindigkeit oder Temperatur der aus den zur Scheibe gerichteten Luftauslässen ausströmenden Luft, Temperatur der Umgebungsluft, Geschwindigkeit des Fahrzeuges, Sonnenintensität und deren Auswirkungen auf die Scheibentemperatur, Wärmeübergangskoeffizient der Scheibe zwischen deren Innen- und Außenseite.

Gemäß einer weiteren vorteilhaften Ausgestaltung der Erfindung wird auf die messtechnische Ermittlung der relativen Luftfeuchtigkeit der Umgebungsluft verzichtet, in dem die relative Luftfeuchtigkeit in Abhängigkeit von der Temperatur der Umgebungsluft vorgegeben wird. Hier bedient man sich Erfahrungswerten, wobei die Größe der relativen Luftfeuchtigkeit unter Worst-Case-Betrachtungen in Abhängigkeit von der Umgebungsluft festgelegt wird. Der erfindungsgemäße Betriebsmodus findet in erster Linie in feuchtwarmen Klimazonen Anwendung. Bei einem dort fahrenden Fahrzeug könnte also diese Funktion aktiviert sein. Die Abhängigkeit der relativen Luftfeuchtigkeit von der Umgebungsluft lässt sich für diese Regionen der Erde relativ gut bestimmen, so dass die Ergebnisse relativ genau sind.

Zusätzlich könnte in die Bestimmung der relativen Luftfeuchtigkeit in Abhängigkeit von der Umgebungslufttemperatur auch noch die Jahreszeit mit eingehen. Auch hier existieren ausreichend Erfahrungswerte, um die Abhängigkeit der relativen Luftfeuchtigkeit von der Umgebungstemperatur und der Jahreszeit in beispielsweise einer Tabelle abzulegen.

Schließlich kann die relative Luftfeuchtigkeit der Umgebungsluft aber auch automatisch entsprechend der geographischen Region, in der sich das Fahrzeug befindet, ermittelt bzw. vorgegeben/abgeschätzt werden. Über einen beispielsweise GPS-Empfänger kann ermittelt werden, wo sich das Fahrzeug gerade befindet. Handelt es sich dabei um eine feuchtwarme Region, so kann zum einen die erfindungsgemäße Funktion des Betriebs einer Fahrzeug-Klimaanlage zugeschaltet werden; zum anderen kann aber auch Einfluss auf die Vorgabe der relativen Luftfeuchtigkeit genommen werden, in dem über die Ortung des Fahrzeuges ermittelbar ist, in welchem feuchtwarmen Gebiet auf der Erde sich das Fahrzeug befindet.

Die Erfindung wird nachfolgend anhand der Zeichnung näher erläutert. Im einzelnen zeigen:
- Fig. 1: in Seitenansicht ein Fahrzeug mit schematisch dargestellter Klimaanlage und
- Fig. 2: ein Blockschaltbild der Hauptkomponenten des Regelungssystems der erfindungsgemäß betriebenen Klimaanlage.

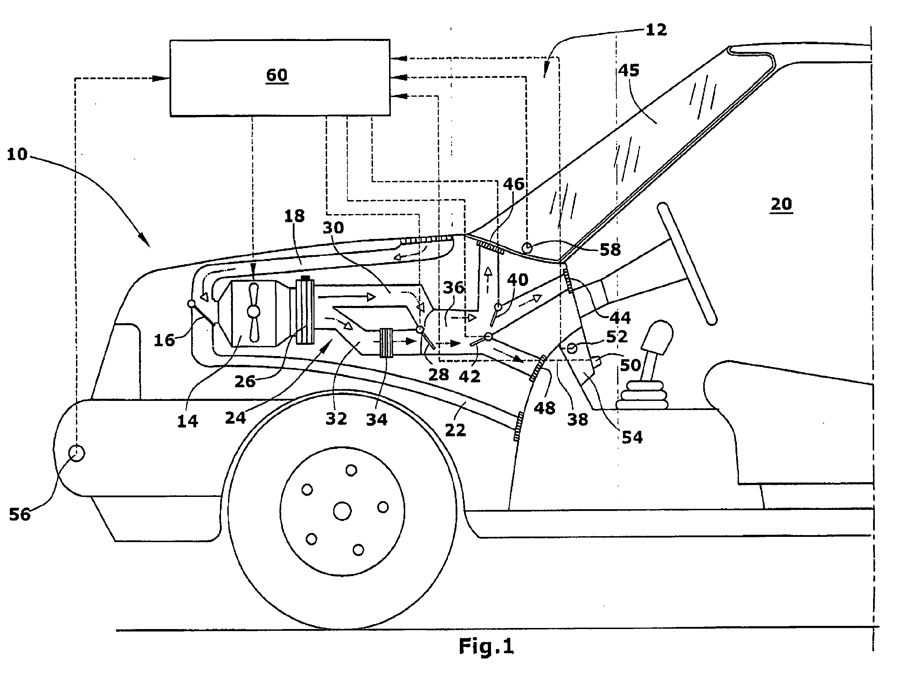

Gemäß Fig. 1 weist eine Klimaanlage 10 für ein Kraftfahrzeug 12 ein Gebläse 14 auf, das in Abhängigkeit von der Stellung einer Frischluft-/Umluftklappe 16 Frischluft aus einem Frischluft-Ansaugkanal 18 oder aus einem im Innenraum 20 endenden Umluftkanal 22 Luft ansaugt. In Strömungsrichtung betrachtet hinter dem Gebläse 14 befindet sich eine Lufttemperiervorrichtung 24 (in diesem Beispiel luftseitig gesteuert, wobei wasserseitig gesteuerte Temperiervorrichtungen ebenso einsetzbar sind) mit einem Kühlaggregat 26 zum Abkühlen der Ansaugluft. Die abgekühlte (und entfeuchtete) Luft durchströmt in Abhängigkeit von der Stellung einer Mischerklappe 28 der Lufttemperiervorrichtung 24 einen von zwei zueinander parallel geschalteten Kanälen 30,32. Einer dieser beiden Kanäle (im Ausführungsbeispiel der Kanal 32) weist ein Heizaggregat 34 zum Erwärmen der zuvor abgekühlten Luft auf. Hinter dem Wärmetauscher 34 sind die beiden Kanäle 30,32 in einer Mischkammer 36 wieder zusammengeführt. An die Mischkammer 36 schließt sich eine Luftverteilvorrichtung 38 an, die zwei Klappen 40,42 aufweist, um die Luft wahlweise über Mannanströmöffnungen 44, der Windschutzscheibe 45 zugewandten Defrostöffnungen 46 und/oder Fußraumausströmöffnungen 48 in den Innenraum 20 einzulassen. Die zuvor genannten Elemente der Klimaanlage sind Bestandteil von deren Luftzuführsystem.

Die Steuerung der gesamten Klimaanlage 10 erfolgt dergestalt, dass eine über eine Solltemperatur-Einstellvorrichtung 50 vorgebbare Solltemperatur T_{SOLL}für den Innenraum 20 erreicht und gehalten wird. Zu diesem Zweck weist die Klimaanlage 10 als Isttemperatur-Ermittlungsvorrichtung einen Temperaturfühler 52 auf, der den Istwert T_{IST} der Innentemperatur misst und z.B. wie die Solltemperatur-Einstellvorrichtung 50 im Steuerungsgerät 54 untergebracht ist. Die Klimaanlage 10 weist ferner diverse Sensoren wie z.B. einen Außentemperatursensor 56 und einen Sonnensensor 58 auf, deren Signale einer zentralen Steuereinheit 60 zugeführt werden, die nach einem Regelalgorithmus Stellantriebe für unter anderem das Gebläse 14 und die diversen Klappen des Luftzuführsystems ansteuert.

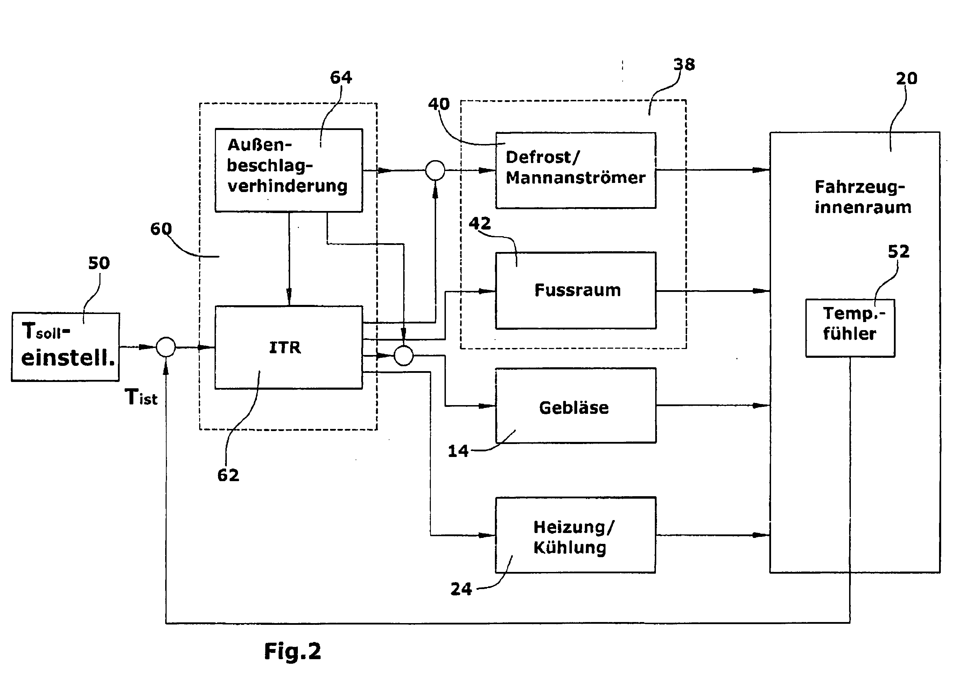

Fig. 2 zeigt eine andere Darstellung des Regelungssystems der Klimaanlage 10 des Fahrzeuges 12 gemäß Fig. 1. Die Steuereinheit 60 umfasst eine Innenraumtemperatur-Regeleinrichtung 62, die das Differenzsignal zwischen der eingestellten Solltemperatur und der ermittelten Tsttemperatur empfängt. Die Innenraumtemperatur-Regeleinrichtung 62 beeinflusst das Gebläse 14, die Lufttemperiervorrichtung 24 und die Klappen 40 und 42 der Luftverteilvorrichtung 38.

Durch Beeinflussung all dieser Komponenten wird das Temperaturniveau im Innenraum des Fahrzeuges 12 beeinflusst, das vom Temperaturfühler 52 erfasst wird und zum Eingang der Innenraumtemperatur-Regeleinrichtung 62 zurückgeführt wird.

Der zuvor beschriebenen Innenraumtemperaturregelung ist eine Taupunkttemperaturregelung für die Windschutzscheibe 45 unterlagert. Zu diesem Zweck weist die Steuereinheit 60 neben der Innenraumtemperatur-Regeleinrichtung 62 eine Außenbeschlagverhinderungs-Regeleinrichtung 64 auf, die in Abhängigkeit von der Taupunkttemperatur der Umgebungsluft des Fahrzeuges 12 einer Abkühlung der Windschutzscheibe 45 entgegenwirkt.

Hintergrund der Windschutzscheiben-Außenbeschlagsverhinderungsregelung ist, dass bei hohen Temperaturen und hoher relativer Luftfeuchtigkeit der Umgehungsfuft die Abkühlung der Windschutzscheibe 45 infolge der sie von innen anströmenden Kaltluft aus den Defrostöffnungen 46 bis unterhalb des Taupunktes der Umgebungsluft abkühlen kann, so dass sich auf der Außenseite kondensierte Feuchtigkeit niederschlägt. Dieses Phänomen ist insbesondere in feuchtwarmen Regionen der Erde zu beobachten.

Erfindungsgemäß wird bei der hier beschriebenen Klimaanlage 10 die relative Luftfeuchtigkeit der Umgebung des Fahrzeuges 12 ermittelt. Dabei wird die relative Feuchtigkeit entweder messtechnisch erfasst oder aber zur Vermeidung eines derartigen Feuchtigkeitssensors angenommen, und zwar basierend auf dem Messwert des Außentemperatursensors 56. Auf Grund von Erfahrungswerten kann man nämlich unter Berücksichtigung von Worst-Case-Betrachtungen bezogen auf feuchtwarme Klimazonen der Erde den Temperaturwerten innerhalb eines bestimmten Temperaturbereichs (beispielsweise 10 bis 40 °C) maximal zu erwartende Werte für die relative Feuchtigkeit zuordnen. Diese Wertepaare können beispielsweise in der Steuereinheit 60 abgelegt sein.

Die Temperatur der Windschutzscheibe 45 kann grundsätzlich messtechnisch erfasst werden. Um auch hier den Hardware-Aufwand für die Sensorik zu vermeiden, bedient man sich zweckmäßigerweise eines Rechenmodells, das in Abhängigkeit von Parametern, die bei einer Klimaanlage grundsätzlich messtechnisch vorliegen, die Scheibentemperatur berechnet. In die Berechnung der Scheibentemperatur gehen dabei die Außentemperatur, die Fahrgeschwindigkeit, der Wärmeübergangskoeffizient von der Außen- zur Innenseite der Windschutzscheibe 45, der Durchsatz bzw. die Geschwindigkeit und die Temperatur der aus den Defrostöffnungen 46 ausströmenden Luft und die Sonnenintensität ein. Zweckmäßigerweise wird auf sämtliche der zuvor genannten Parameter zurückgegriffen, um die Temperatur der Windschutzscheibe 45 zu ermitteln.

Die Beeinflussung der auf Grund der Innenraumtemperatur-Regeleinrichtung 62 vorgegebenen, aus den Defrostöffnungen 46 austretenden Luftströmung zwecks Verhinderung von Außenbeschlag auf der Windschutzscheibe 45 erfolgt erfindungsgemäß erst dann, wenn die errechnete (oder gemessene) Windschutzscheibentemperatur um weniger als eine Mindestschwelle oberhalb der angenommen bzw. messtechnisch erfassten Taupunkttemperatur der Umgebungsluft liegt. Als Schwelle hat sich hier in der Praxis ein Temperaturunterschied von mindestens 3 °C als vorteilhaft herausgestellt. Liegt also die Windschutzscheibentemperatur um weniger als 3 °C oberhalb der Taupunkttemperatur der Umgebungsluft, greift die Außenbeschfagverhinderungs-Regeleinrichtung 64 auf die Stellung der Defrost/Mannanströmer-Klappe 40 ein, und zwar dergestalt, dass der Durchsatz der aus den Defrostöffnungen 46 austretenden Luft verringert wird, die Klappe 40 also in Richtung "Schließen der Defrostöffnungen" verfahren wird. Da bei Beschlagsgefahr die Defrostöffnungen 46 also geschlossen bzw. mehr geschlossen werden, erhöht sich die rechnerische Scheibentemperatur. Durch die Außenbeschlagverhinderungs-Regeleinrichtung 64 (vorzugsweise als PI-Regler realisiert) stellt sich nun ein Klappenwinkel ein, der zu einem Luftdurchsatz durch die Defrostöffnungen 46 führt, welcher die Windschutzscheibe 45 weniger stark abkühlt, so dass Scheibenbeschlag an der Außenseite zuverlässig verhindert werden kann.

Durch das Verfahren der Klappe 40 in Richtung "Schließen der Defrostöffnungen" bzw., im Falle einer anders aufgebauten Luftverteifvorrichtung, durch Schließen einer ausschließlich der Defrostöffnungen zugeordneten Klappe verändert sich die vom Gebläse gelieferte Luftmenge grundsätzlich nicht. Das Schließen der Defrostöffnungen resultiert daher in einer Erhöhung eines Luftdurchsatzes durch andere in den Innenraum mündende Luftauslässe. Da sich dies nachteilig auf den Komfort auswirken kann, liefert die Außenbeschlagverhinderungs-Regeleinrichtung 64 ein Korrektursignal an das Gebläse 14 zum Zurückfahren desselben, so dass die aus den (seitlichen) Mannanströmöffnungen 44 austretende Luftmenge gegenüber dem Zustand bei nicht beeinflusster Defrost/Mannanströmöffnungsklappe im wesentlichen unverändert ist.

Die Aktivierung der zuvor beschriebenen Außenbeschlagsverhinderungsregelung kann durch Voreinstellung (bei Auslieferung des Fahrzeuges) oder aber automatisch erfolgen. Im zuletzt genannten Fall könnte die Aktivierung beispielsweise über eine Fahrzeugortung erfolgen. Die erforderliche Hardware (GPS- o.dgl. Empfänger) ist bei Fahrzeugen mit Navigationssystem bereits vorhanden.

### BEZUGSZEICHENLISTE

- 10: Klimaanlage
- 12: Kraftfahrzeug
- 14: Gebläse
- 16: Frischfuft-/Umluftklappe
- 18: Frischluft-Ansaugkanal
- 20: Innenraum
- 22: Umluftkanal
- 24: Luftternpericrvorrichtung
- 26: Kühlaggregat
- 28: Mischerklappe
- 30: Kanäle
- 32: Kanäle
- 34: Heizaggregat
- 36: Mischkammer
- 38: Luftverteilvorrichtung
- 40: Klappen
- 42: Klappen
- 44: Mannanströmöffnungen
- 45: Windschutzscheibe
- 46: Defrostöffnungen
- 48: Fußraumausströmöffnungen
- 50: Solltemperatur-Einstellvorrichtung
- 52: Temperaturfühler
- 54: Steuerungsgerät
- 56: Außentemperatursensor
- 58: Sonnensensor
- 60: Steuereinheit
- 62: Innenraumtemperatur-Regeleinrichtung
- 64: Außenbeschlagverhinderungs-Regeleinrichtung

## Patentansprüche

1. Verfahren zum Betreiben einer Fahrzeug-Klimaanlage zwecks Vermeidung des Beschlagens der Außenseite einer von innen mit Kaltluft anströmbaren Scheibe, insbesondere der Windschutzscheibe, bei dem
- die Taupunkttemperatur der Umgebungsluft des Fahrzeuges (12) ermittelt oder abgeschätzt wird,
- die Temperatur der Scheibe (45) ermittelt oder abgeschätzt wird,
- die Differenz aus der Taupunkttemperatur und der Scheibentemperatur ermittelt wird und
- der Durchsatz der aus einem zur Scheibe (45) gerichteten Luftauslass (46) ausströmenden Luft derart gesteuert wird, dass die Scheibe (45) eine Temperatur annimmt, die um mindestens einen vorgebbaren Differenzwert oberhalb der ermittelten oder abgeschätzten Taupunkttemperatur der Umgebungsluft liegt,
**dadurch gekennzeichnet,**
- **dass** der Durchsatz der aus dem zur Scheibe (45) gerichteten Luftauslass (46) ausströmenden Luft durch Verstellung eine Klappe (40) eingestellt wird und
- **dass** sich bei Einstellung des der Regelung der Innenraumtemperatur entsprechenden Istwerts für den Durchsatz der aus dem zur Scheibe (45) gerichteten Luftauslass (46) ausströmenden Luft aus mindestens einem anderen Luftauslass (44), aus dem Luft in Richtung der Insassen strömt, ein Istwert für dessen Durchsatz einstellt und dass bei Veränderung der Klappe (40) durch Verstellung eines einen Luftstrom erzeugenden Gebläses (14) der Durchsatz an aus dem mindestens einen anderen Luftauslass (44) ausströmender Luft im wesentlichen unverändert bleibt.

2. Verfahren nach Anspruch 1, **dadurch gekennzeichnet,**
- **dass** der Durchsatz und die Temperatur der aus dem zur Scheibe (45) gerichteten Luftauslass (46) ausströmenden Luft auf der Regelung der Innenraumtemperatur entsprechende Istwerte eingestellt werden,
- **dass** der Durchsatz der aus dem zur Scheibe (45) gerichteten Luftauslass (46) ausströmenden Luft gegenüber dem der Regelung der Innenraumtemperatur entsprechenden Istwert verringert wird, wenn die Scheibentemperatur geringer ist als die Taupunkttemperatur zuzüglich des vorgebbaren Differenzwerts, und
- **dass** der Durchsatz der aus dem zur Scheibe (45) gerichteten Luftauslass (46) ausströmenden Luft wieder in Richtung auf den der Regelung der Innenraumtemperatur entsprechenden Istwert verstellt wird, wenn die Scheibentemperatur nach einer Unterschreitung der Taupunkttemperatur zuzüglich des vorgebbaren Differenzwerts wieder oberhalb der Summe aus Taupunkttemperatur und Differenzwert liegt.

3. Verfahren nach einem der Ansprüche 1 bis 2, **dadurch gekennzeichnet, dass** die Temperatur der Scheibe (45) anhand zumindest des Durchsatzes oder der Geschwindigkeit oder der Temperatur der aus dem zur Scheibe (45) gerichteten Luftauslass (46) ausströmenden Luft oder der Temperatur der Umgebungsluft oder des Wärmeübergangskoeffizienten der Scheibe (45) zwischen deren Innen- und Außenseite oder der Fahrgeschwindigkeit oder der Sonnenintensität ermittelt wird.

4. Verfahren nach einem der Ansprüche 1 bis 3, **dadurch gekennzeichnet, dass** die relative Luftfeuchtigkeit der Umgebungsluft in Abhängigkeit von der Temperatur der Umgebungsluft vorgegeben wird.

5. Verfahren nach Anspruch 4, **dadurch gekennzeichnet, dass** die relative Luftfeuchtigkeit der Umgebungsluft neben der Temperatur der Umgebungsluft auch in Abhängigkeit von der geographischen Region, in der sich das Fahrzeug (12) gerade befindet, und/oder der Jahreszeit vorgegeben wird.

## Claims

1. Method for operating an air conditioning device of a vehicle with the purpose of preventing the fogging of the outer side of a pane, in particular the windshield, against which cold air can be blown from the inside, wherein
- the dew-point temperature of the ambient air of the vehicle (12) is determined or estimated,
- the temperature of the pane (45) is determined or estimated,
- the difference of the dew-point temperature and the temperature of the pane is determined, and
- the flow rate of the air flowing from an air outlet (46) directed towards the pane (45) is controlled such that the pane (45) assumes a temperature that is higher than the determined or estimated dew-point temperature of the ambient air by at least a pre-settable differential value,
**characterized in that**
- the flow rate of the air flowing from the air outlet (46) directed towards the pane (45) is adjusted by adjusting a flap (40), and
- when the actual value corresponding to the setting for the interior temperature is set for the flow rate of air flowing from the air outlet (46) directed towards the pane (45), an actual value is set for the flow rate of air flowing from at least one other air outlet (44) towards the passengers, and that, when the flap (40) is moved by an adjustment of a fan (14) generating an air flow, the flow rate of air flowing from said at least one other air outlet (44) remains substantially constant.

2. Method of claim 1, **characterized in that**
- the flow rate and the temperature of air flowing from the air outlet (46) directed towards the pane (45) are adjusted to actual values corresponding to the setting of the interior temperature,
- the flow rate of air flowing from the air outlet (46) directed towards the pane (45) is reduced with respect to the actual value corresponding to the setting of the interior temperature, if the temperature of the pane is lower than the dew-point temperature plus the pre-settable differential value, and
- the flow rate of air flowing from the air outlet (46) directed towards the pane (45) is readjusted towards the actual value corresponding to the setting of the interior temperature, if, after having fallen below the dew-point temperature plus the pre-settable differential value, the temperature of the pane is again higher than the sum of the dew-point temperature and the differential value.

3. Method of claims 1 and 2, **characterized in that** the temperature of the pane (45) is determined from at least the flow rate or the velocity or the temperature of air flowing from the air outlet (46) directed towards the pane (45) or from the temperature of the ambient air or from the heat transfer coefficient of the pane (45) between its inner and outer sides or from the traveling speed or from the intensity of the sun.

4. Method of one of claims 1 to 3, **characterized in that** the relative humidity of the ambient air is predetermined in dependence on the temperature of the ambient air.

5. Method of claim 4, **characterized in that**, besides the temperature of the ambient air, the relative humidity of the ambient air is also predetermined in dependence on the geographical region the vehicle (12) is in at the moment and/or the season.

## Revendications

1. Procédé destiné à l'opération d'un système d'air conditionné pour véhicules en vue d'éviter l'embuement du côté extérieur d'une vitre, particulièrement le pare-brise, contre laquelle de l'air froid peut être dirigé de l'intérieur, dans lequel
- la température du point de rosée de l'air ambiant du véhicule (12) est déterminée ou estimée,
- la température de la vitre (45) est déterminée ou estimée,
- la différence de la température du point de rosée et la température de la vitre est déterminée, et
- le débit d'air s'écoulant d'une sortie d'air (46) dirigée vers la vitre (45) est commandé de manière à ce que la vitre (45) adopte une température qui dépasse la température déterminée ou estimée du point de rosée de l'air ambiant par au moins une valeur différentielle pré-déterminable,
**caractérisé en ce que**
- le débit d'air s'écoulant d'une sortie d'air (46) dirigée vers la vitre (45) est ajusté par le déplacement d'un clapet (40),
- lors de l'ajustage de la valeur réelle, correspondant à l'ajustage de la température de l'intérieur, pour le débit d'air s'écoulant de ladite sortie d'air (46) dirigée vers la vitre (45), il se produit une valeur réelle pour le débit d'air s'écoulant d'une autre sortie d'air (44) vers les passagers, et que, lors d'un déplacement du clapet (40) à cause d'un ajustage d'un ventilateur (14) générant un écoulement d'air, le débit d'air s'écoulant de ladite au moins une autre sortie d'air (44) reste sensiblement inchangé.

2. Procédé selon la revendication 1, **caractérisé en ce que**
- le débit et la température de l'air s'écoulant de ladite sortie d'air (46) dirigée vers la vitre (45) sont ajustés sur des valeurs réelles correspondant à l'ajustage de la température de l'intérieur,
- le débit de l'air s'écoulant de ladite sortie d'air (46) dirigée vers la vitre (45) est réduit par rapport à la valeur réelle correspondant à l'ajustage de la température de l'intérieur, si la température de la vitre est inférieure à la température du point de rosée plus ladite valeur différentielle pré-déterminable, et
- le débit de l'air s'écoulant de ladite sortie d'air (46) dirigée vers la vitre (45) est rajusté vers la valeur réelle correspondant à l'ajustage de la température de l'intérieur, si la température de la vitre a dépassé la somme de la température du point de rosée et ladite valeur différentielle, après avoir allée en deçà de la température du point de rosée plus ladite valeur différentielle pré-déterminable.

3. Procédé selon les revendications 1 et 2, **caractérisé en ce que** la température de la vitre (45) est déterminée au moins du débit ou de la vitesse ou de la température de l'air s'écoulant de ladite sortie d'air (46) dirigée vers la vitre (45) ou de la température de l'air ambiant ou du coefficient de transfert de chaleur de la vitre (45) entre ses faces intérieure et extérieure ou de la vitesse du véhicule ou de l'intensité du soleil.

4. Procédé selon l'une quelconque des revendications 1 à 3, **caractérisé en que** l'humidité relative de l'air ambiant est prédéterminée en fonction de la température de l'air ambiant.

5. Procédé selon la revendication 4, **caractérisé en ce qu'**à part de la température de l'air ambiant, l'humidité relative de l'air ambiant est aussi prédéterminée en fonction de la région géographique dans laquelle se trouve le véhicule (12) à ce moment et/ou de la saison.
